# EUROPEAN PATENT SPECIFICATION

(11) **EP 4 090 057 B1**
(45) Date of publication and mention of the grant of the patent: **29.01.2025**
(21) Application number: 21305670.8
(22) Date of filing: 21.05.2021
(51) Int. Cl.: H04W 4/80, H04W 88/02, G02B 27/01, G06F 3/14, G06T 1/20, G06T 15/00, G06T 19/00, G06F 3/01, G06F 3/048, G06F 3/147, G06F 16/587, G06F 16/909, G06F 1/16, A63F 13/327, A63F 13/355, A63F 13/60, A63F 13/25

(54) **A SHARED MEMORY FOR IMPROVED DISPLAY BY A NEAR-EYE DISPLAY DEVICE**
GEMEINSAM GENUTZTER SPEICHER ZUR VERBESSERTEN ANZEIGE DURCH EINE AUGENNAHE ANZEIGEVORRICHTUNG
MÉMOIRE PARTAGÉE POUR UN AFFICHAGE AMÉLIORÉ PAR UN DISPOSITIF D'AFFICHAGE PROCHE DE L' IL

(30) Priority: 10.05.2021 EP 21305601
(43) Date of publication of application: 16.11.2022
(73) Proprietor: Microoled, 38000 Grenoble (FR)
(72) Inventor: CUBIZOLLE, Thomas, 38000 GRENOBLE CEDEX 09 (FR); WINDIC, Matthieu, 38000 GRENOBLE CEDEX 09 (FR); BONJOUR, Xavier, 38000 GRENOBLE CEDEX 09 (FR)
(74) Representative: Plasseraud IP

(56) References cited:
- US-A1- 2014 121 017
- US-A1- 2020 035 206
- US-A1- 2020 168 177

## Description

### FIELD OF THE INVENTION

The present invention relates to the field of Near-Eye Display devices. More specifically, it relates to the field of the optimization of the management of display resources in a Near-Eye Display device.

### BACKGROUND PRIOR ART

Smart glasses are glasses which, in addition of letting the user view a scene, provide the user with information in superimposition to the scene, for example using an OLED (Organic Light-Emitting Diode) display. The smart glasses can therefore be qualified as "see through" if the display is performed on the glasses, in the same zones wherein the wearer sees the outdoor scene. Conversely, the display can occur in a specific zone wherein the glasses are not transparent. Smart glasses are especially useful for physical activities like sports, or more generally outdoor uses. Indeed, the smart glasses can provide the wearer of the glasses with live information about his/her activities. For example, a runner can benefit from instantaneous information about his/her running speed, elapsed time of running, the distance which has been crossed, etc.

A conventional approach for designing smart glasses consists in equipping the glasses with all the sensors and computing means for generating the display. Such smart glasses therefore comprise components such as a CPU, a large memory storage, communication capabilities and sensors to monitor the activity of the user (e.g accelerometer, gyro, GPS, etc.). Such smart glasses therefore operate as a computer and can be programmed to deliver to the user any information that he/she needs. However, the presence of these components renders the glasses bulky and heavy, and therefore unpleasant to use.

In order to alleviate these drawbacks, one option consists in using "connected" glasses, by opposition to "smart" glasses. "Connected" glasses are also glasses allowing to provide a user with information in superimposition, for example using OLED display. By opposition to "smart glasses, "connected" glasses are equipped with minimal computing and storage capabilities to control the display, and are connected to a computing device (for example, a smartphone) from which they receive instructions to define the content of display. Therefore, all the complex operation of interaction with sensors, computing user data, defining the layout of the display, etc. are performed by the computing device. The connected glasses receive basic graphical instructions and generate the display accordingly. Therefore, the connected glasses require minimal computing and storage capacities, and are much lighter and convenient to use. The connection between the computing device and the connected glasses may be a local wireless connection, such as a Bluetooth, or Bluetooth Low Energy (BLE) connection. Such a connection is very well suited for establishing a direct link with two close devices, but provides a limited bandwidth for communication with the devices.

Some of the commands sent by a computing device to connected glasses may take as arguments display resources, such as an image. One conventional approach for managing the interactions with a computing device and connected glasses consists in letting the computing device send the display resources when they are needed, for example when sending display instructions, or at the start of an application.

However, this may cause a significant latency, because an entire resource (for example, a whole image) needs to be transferred before the command can be executed by the connected glasses. This is especially true when a low bandwidth connection such as Bluetooth or BLE is used. Such a latency is detrimental to the user experience.

More generally, the same problems arise for the display of display resources in any kind of Near-Eye Display device (NED). Indeed, it is desirable for each Near-Eye Display device to limit in the same time the computing resources, the memory resources and the latency experienced by the user.
the document US 2020035206A1 is known, but fails to cure the above mentioned deficiencies.

There is therefore the need for an optimized management of display resources for Near-Eye Display devices, which allows a connected Near-Eye Display device equipped with minimal computing and storage resources to display resources with limited latency.

### SUMMARY OF THE INVENTION

To this effect, the invention discloses a computing device comprising: a communication endpoint configured to establish a connection with a Near-Eye Display device; at least one processing logic configured to send to said Near-Eye Display device, through said communication endpoint: a layout comprising at least one graphical command, each of said at least one graphical command being defined by an identifier and at least one command parameter; send a command to save said layout; whenever a display of said layout to a wearer of the Near-Eye Display device is needed, a command to display said layout.

Advantageously, said communication endpoint is a Bluetooth Low Energy (BLE) communication endpoint.

Advantageously, the Near-Eye Display device is a BLE server.

Advantageously, layouts belonging to a same application or program installed in the computing device are stored in a same configuration in the Near-Eye Display device, said configuration corresponding to a defined folder in a storage medium of the Near-Eye Display device.

Advantageously, the at least one processing logic is configured to send to said Near-Eye Display device commands to perform one or more of: obtaining a list of configurations in said Near-Eye Display device; setting one of the configurations in said list as an active configuration; reading the content of a configuration; writing the content of a configuration; creating a configuration; deleting a configuration.

Advantageously, the at least one processing logic is configured, prior to create a configuration or save a layout, to send commands to the Near-Eye Display device to: obtain an amount of free space; if said free space is not sufficient to create the configuration or save the layout, delete an other configuration.

Advantageously, the other configuration is the configuration that has been set as active configuration since the longest time.

Advantageously, the other configuration is the configuration that is set as active configuration the least often.

The invention also discloses a Near-Eye Display device comprising: a communication endpoint configured to establish a connection with a computing device; display means configured to display one or more layouts; a storage medium; at least one processing logic configured to: upon the reception from said computing device of a layout comprising at least one graphical command, each of said at least one graphical command being defined by an identifier and at least one command parameter, and a command to save said layout, saving said layout on said storage medium; upon the reception from said computing device of a command to display said layout, retrieving said layout from said storage medium, and displaying said layout.

The invention also discloses a computing system comprising: a computing device according to one of the embodiments of the invention; a Near-Eye Display device according to one of the embodiments of the invention.

The invention also discloses a computer-implemented method comprising, by a computing device: sending to a Near-Eye Display device a layout comprising at least one graphical command, each of said at least one graphical command being defined by an identifier and at least one command parameter; sending a command to said Near-Eye Display device to save said layout; whenever a display of said layout to a wearer of the Near-Eye Display device is needed, sending a command to said Near-Eye Display device to display said layout.

The invention also discloses a computer-implemented method comprising, by a Near-Eye Display device according to one of the embodiments of the invention: upon the reception from said computing device of a layout comprising at least one graphical command, each of said at least one graphical command being defined by an identifier and at least one command parameter, and a command to save said layout, saving said layout on a storage medium; upon the reception from said computing device of a command to display said layout, retrieving said layout from said storage medium, and displaying said layout.

The invention also discloses a computer program product, stored on a non-transitory computer readable medium, comprising computer code instructions which, when executed by a computer, cause the computer to execute a method according to one of the embodiments of the invention.

The invention also discloses a computer-readable storage medium comprising instructions which, when executed by a computer, cause the computer to execute a method according to one of the embodiments of the invention.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1 represents a computing system comprising a Near-Eye Display device connected to a computing device in which the invention can be implemented;
- Figure 2 represents three examples of displays based on predefined layouts for a Near-Eye Display device in number of embodiments of the invention;
- Figure 3 represents an example of an organization of display resources stored in a Near-Eye Display device in a number of embodiments of the invention;
- Figure 4 represents an example of a computer-implemented method executable by a computing device in a number of embodiments of the invention;
- Figure 5 represents an example of a computer-implemented method executable by a Near-Eye Display device in a number of embodiments of the invention;
- Figure 6 represents an example of deletion of a display configuration in a number of embodiments of the invention;
- Figure 7 represents an example of creation of a configuration in a number of embodiments of the invention;
- Figure 8 represents an example of selection of a configuration, and display of layout of the configuration, in a number of embodiments of the invention;
- Figure 9 represents an example of failed selection of a configuration in a number of embodiments of the invention.

### DETAILED DESCRIPTION OF THE INVENTION

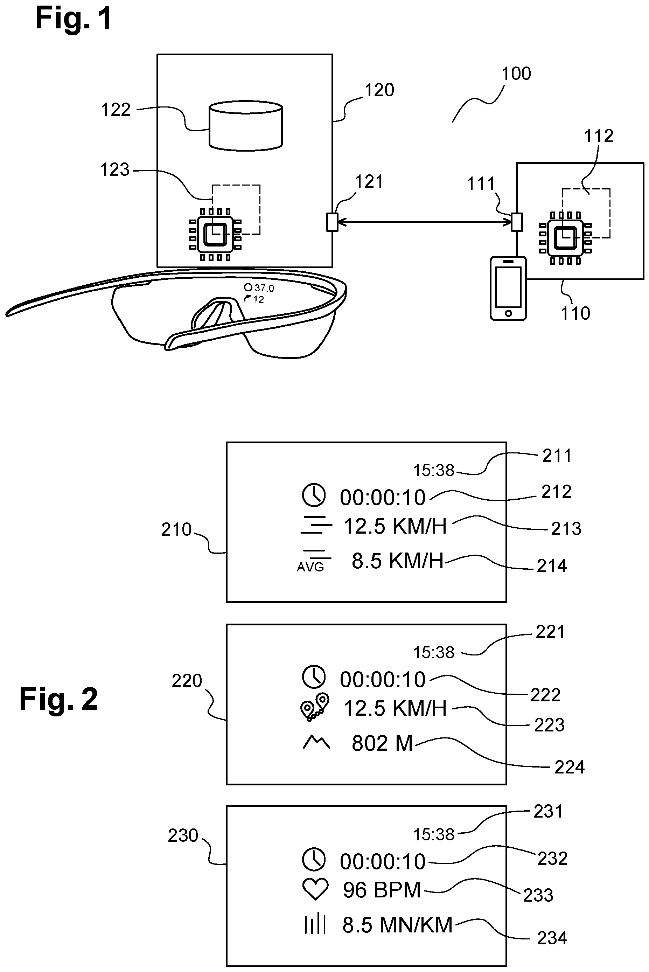

The figure 1 represents a computing system comprising a Near-Eye Display device connected to a computing device in which the invention can be implemented.

The system 100 comprises a computing device 110, and a Near-Eye Display device (NED) 120.

A Near-Eye Display device refers to a device which is attached in close proximity to the eye of a user and comprises an optical system allowing the display of display resources such as images to the eye of the user.

In the example of figure 1, the Near-Eye Display device is a connected pair of glasses. However, the invention is not restricted to this example, and according to various embodiments of the invention, the NED 120 could be any kind of Near-Eye Display device such as:
- binoculars;
- sights;
- a head up display;
- a head-mounted display;
- a Virtual Reality (VR) platform;
- a night vision system;
- a thermal vision system;
- a telemeter;
- a camera with viewfinder;
- etc.

One of the general objectives of the system 100 is to use the computing device to control the display of a NED, in this example a pair of glasses 120. The computing device 110 can for example calculate a number of elements to display to the user, and cause the display of these elements by the pair of glasses 120 in superimposition to the view of the scene through the glasses. For example, when the wearer of the glasses is running, the computing device 110 can calculate a running speed of the user and providing instructions to the glasses to provide the information to the user through the glasses.

Such a display may be based on display resources, such as images or layouts. One of the objectives of the invention is to optimize the management of the display resources.

The computing device 110 can be any computing device with computing and communication capabilities.

In a number of embodiments of the invention, the computing device 110 is a device that can be worn by the wearer of the glasses 120, such as a smartphone, a tablet or a smartwatch. Therefore, the device 110 can be directly connected to the glasses, for example through a wire or a Bluetooth connection, in order to control the display of the glasses 120 during the outdoor activities of the user.

The pair of glasses 120 may be any pair of glasses equipped with computing, storage, communication and display capabilities, which is able to display data to the wearer of the glasses in superimposition of the scene which is viewed by the wearer through the glasses.

The computing device 110 comprises a communication endpoint 111 configured to establish a connection with the pair of glasses 120, and the pair of glasses 120 comprises a communication endpoint 121 configured to establish a connection with first computing device 110.

The communication endpoints 111 and 121 may for example form a direct connection between the computing device 110 and the pair of glasses 120. This connection may be either a wired connection, or a wireless connection such as a Bluetooth connection. Such connections provide the advantage of allowing the computing device 110, and the pair of glasses 120 to communicate directly with each other.

In a number of embodiments of the invention, the connection between the computing device 110 and the pair of glasses 120 is a BLE (Bluetooth Low Energy) connection). The communications endpoints 111 and 121 are therefore BLE communication endpoints.

Using BLE allows sending data between the device 110 and the pair of glasses 120 with low energy consumption. This allows limiting the battery usage of both the computing device 110 and the pair of glasses 120. This is more particularly relevant for the pair of glasses 120, because this contributes to allow the pair of glasses 120 to benefit from a sufficient autonomy even when with a small battery size. Therefore, the weight and size of the glasses can be reduced.

In embodiments wherein BLE is used, the pair of glasses 120 can be a BLE server to which the computing device 110 connects. Therefore, the pair of glasses 120 can declare a dedicated GATT (Generic ATTribute) profile defining the commands that can be used, and the tempo of reception of the packets. The glasses can set themselves in energy saving / low consumption modes during the reception of successive packets, in order to further save energy.

The computing device 110 further comprises at least one processing logic 112. According to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called "the processing logic". However, it should be noted that the operations of the invention may also be performed in a single processing logic, or a plurality of processing logics, for example a plurality of processors.

The at least one processing logic 112 may, over the course of the disclosure, be noted, for the sake of simplicity "the processing logic" even though this may, in some embodiments of the invention, designate a plurality of processing logics.

The pair of glasses comprises display means configured to display one or more display resources in superimposition to the glasses (see-through). This allows the wearer of the glasses to be provided with information on top of the scene that he/she is looking at, without needing to move his/her head, as in a head-up display. The pair of glasses therefore forms a see-through optical system. The display means may be for example an OLED display.

More generally, a Near-Eye Display device of the invention comprises display means that may be configured either to display the display resources in superimposition to what the wearer sees through the NED (this is the case of through devices, such as glasses or sights), or directly of the NED is an opaque display (this is for example the case of a VR helmet).

The pair of glasses further comprises a storage medium 122. The storage medium 122 may be any kind of memory, such as a RAM or a flash memory, allowing the storage and retrieval of data. The pair of glasses 120 may be designed with a limited memory size, in order to limit the weight and size of the glasses.

The pair of glasses 120 further comprises at least one processing logic 123. In order to limit the weight and size of the glasses, the at least one processing logic 123 may be a lightweight processing logic such as a microcontroller or a low power processor. For example, an ARM M0 processor can be used.

In a number of embodiments of the invention, the pair of glasses further comprises sensors, such as ambient light or gesture sensors. The reading of the sensors can be directly used by the pair of glasses 120, or sent to the computing device 110 for further use.

The processing logic 112 is configured to:
- send a display resource to the pair of glasses 120;
- send a command to the pair of glasses 120 to save said resource;
- whenever a display of said resource to a wearer of the glasses is needed, send a command to the pair of glasses 120 to display said resource.

Conversely, the processing logic 123 is configured to:
- upon the reception from the computing device 110 of a display resource, and a command to save said resource, save said display resource on the storage medium 122;
- upon the reception from the computing device 110 of a command to display said resource, retrieve said resource from the storage medium 122, and display said resource.

Stated otherwise, when a resource such as an image or a layout needs to be used, it is sent once by the computing device 110 to the pair of glasses 120, and stored on the storage medium 122 of the pair of glasses 120. Each time the resource needs to be used, as it is already stored by the pair of glasses 120, the computing device 110 needs to send only a command to display the resource (or a command that references the resource) so that the resource can be used for display.

Therefore, the resource needs to be transmitted once, and can be transmitted before it actually needs to be used. For example, the resource can be transmitted and stored when an application using the resource is installed on the computing device 110. Therefore, when a user is willing to use the application, the resource is already stored for use on the pair of glasses 120.

As a display resource is often much heavier that commands to display the resource, during the use of the glasses, only a limited amount of information need to be exchanged. Therefore, the display can occur in the glasses even with a limited latency. Therefore, low bandwidth connections such as BLE can be used, thereby allowing low energy consumption, and equipping the glasses 120 with lightweight batteries.

The system 100 also allows the display on the glasses 120 to be defined by the computing device 110. Therefore, the computing capacity of the processing logic 123 can be limited.

Therefore, the wearer of the glasses 120 can be provided with display using display resources, without experiencing latency on the display, even if the computing, communication, and storage capabilities of the glasses are limited in order to reduce the size and weight of the glasses.

As explained above, the figure 1 is provided by means of non-limitative example only, and a system according to the invention is not restricted to pair of glasses, but could comprise any kind of Near-Eye Display device. Indeed, it is also desirable to limit the size and weight of other Near-Eye Display devices such as binoculars, sights, etc. while limiting the latency of the display for the user of the NED. All the embodiments discussed in figure 1 are respectively applicable to any Near-Eye Display device. The Near-Eye Display device may be a see-though display, as well as an opaque display.

Figure 2 represents three examples of displays based on predefined layouts for a Near Eye Display in number of embodiments of the invention.

In a number of embodiments of the invention, the computing device 110 can send display commands to the pair of glasses 120.

Examples of commands will be listed below. In the examples below, the connection between the computing device 110 and the Near Eye Display 120 is a BLE connection, and the computing device 110 and the Near Eye Display 120 communicate through the GATT (Generic Attribute Profile) protocol, wherein the Near Eye Display 120 is the GATT server, and the computing device is the GATT client. The commands listed below are therefore expressed using the GATT format. However, these are provided by means of non-limitative example only, and the invention is not restricted to these command types.

In the convention of the commands, the parameters x and y define respectively a horizontal and a vertical distances, in number of pixels, from the top-left corner of the NED display.

The commands below provide examples of commands to cause the drawing of simple shapes and elements, such as points, circles or lines.

| **ID** | **commands** | **Parameters** | **Data length (B)** | **Description** |
|---|---|---|---|---|
| 0x30 | color | color | 1 | Sets the grey level (0 to 15) used to draw the next graphical element |
| 0x31 | point | x(2B) y(2B) | 4 | Set a pixel on at the corresponding coordinates |
| 0x32 | line | x0(2B) | 8 | Draw a line at the corresponding coordinates |
| | | y0(2B) | | |
| | | x1(2B) | | |
| | | y1(2B) | | |
| 0x33 | rect | x0 (2B) | 8 | Draw an empty rectangle at the corresponding coordinates |
| | | y0(2B) | | |
| | | x1(2B) | | |
| | | y1(2B) | | |
| 0x34 | rectf | x0 (2B) | 8 | Draw a full rectangle at the corresponding coordinates |
| | | y0(2B) | | |
| | | x1(2B) | | |
| | | y1(2B) | | |
| 0x35 | circ | x(2B) y(2B) r | 5 | Draw an empty circle at the corresponding coordinates |
| 0x36 | circf | x(2B) y(2B) r | 5 | Draw a full circle at the corresponding coordinates |
| 0x37 | txt | x(2B) y(2B) r f c string | >= 8 | Write text string at coordinates(x0,y0) with rotation, font size, and color |
| 0x38 | polyline | x0 (2B) | (n + 1) * 4 | Draw a multiple connected lines at the corresponding coordinates |
| | | y0(2B) | | |
| | | ...xN(2B) | | |
| | | yN(2B) | | |

In a number of embodiments of the invention, the luminance is expressed using a 16 levels grayscale, using values ranging from 0 to 16.

The commands below provide examples of commands to save and display images:

| **ID** | **commands** | **Parameters** | **Data length (B)** | **Description** |
|---|---|---|---|---|
| 0x40 | imqList | - | 0 | Give the list of saved images |
| 0x41 | imqSave | id size(4B) width(2B) | 6B for the first chunk | Save 4bpp image of size bytes and width pixels |
| 0x42 | imqDisplay | id x(2B) y(2B) | 5 | Display image id to the corresponding coordinates. Coordinates are signed, they can be negative |
| 0x43 | imqDelete | id | 1 | Delete image. if id= 0xFF, delete all images |
| | | size(4B) | 10B for the first chunk | Stream 1bpp bitmap image on display without saving it in memory |
| | | width(2B) | | |
| 0x44 | imqStream | x(2B) y(2B) | | |
| | | size(4B) | 6B for the first chunk | Save 1bpp bitmap of size bytes and width pixels |
| 0x45 | imgSave1bpp | width(2B) | | |

While most of these commands imply a transfer of information from the computing device to the Near Eye Display (for example, to send image data to save, or to cause the display of an image), the command imgList causes the Near Eye Display to return to the computing device 110 a list of images in memory, through the command, sent in return:

| **ID** | **commands** | **data** | **Data length (B)** | **Description** |
|---|---|---|---|---|
| 0x40 | imgList | id height(2B) width(2B) | 5 x n | list of images in memory heightand width are in pixel |
| | | ... | | |
| | | idN widthN(2B) | | |
| | | heightN(2B) | | |

The commands below can be sent by the computing device 110 to the Near Eye Display 120 to control the fonts that may be used for the display:

| **ID** | **commands** | **Parameters** | **Data length (B)** | **Description** |
|---|---|---|---|---|
| 0x50 | fontList | - | 0 | Give the list of saved fonts with their height |
| 0x51 | fontSave | id size(2B) | 3B for the first chunk | Save font id of size Bytes |
| | | data(xB) | | |
| 0x52 | fontSelect | id | 1 | Selects font which will be used for followings text commands |
| 0x53 | fontDelete | id | 1 | Erase font from memory |

Upon the reception of the fontList commands, the Near Eye Display 120 returns a list of fonts to the computing device 110:

| **ID** | **commands** | **data** | **Data length (B)** | **Description** |
|---|---|---|---|---|
| 0x50 | fontList | id height | 2 x n | list of font in memory with there height |
| | | ... | | |
| | | idN heightN | | |

Predefined gauges can also be used through the commands:

| **ID** | **commands** | **Parameters** | **Data length (B)** | **Description** |
|---|---|---|---|---|
| 0x70 | gaugeDisplay | u8 id | 2 | Display value (in percentage) of the gauge |
| | | u8 value | | |
| 0x71 | gaugeSave | u8 id | 12 | Save the parameters for the gauge id |
| | | s16 x | | |
| | | s16 y | | |
| | | u16 r | | |
| | | u16 rln | | |
| | | u8 start | | |
| | | u8 end | | |
| | | bool clockWise | | |
| 0x72 | gaugeDelete | u8 id | 1 | Delete a gauge if id= 0xFF, delete all gauges |
| 0x73 | gaugeList | - | 0 | Give the list of saved gauges |
| 0x74 | gaugeGet | u8 id | 1 | Get a gauge parameters |

The Near-Eye Display device can return the commands below, in response to the gaugeList and gaugeGet commands respectively:

| **ID** | **commands** | **data** | **Data length (B)** | **Description** |
|---|---|---|---|---|
| 0x73 | gaugeList | u8 id | n | list of gauges in memory Listing is not sorted by id |
| | | ... | | |
| | | u8 idN | | |
| 0x74 | gaugeGet | s16 x | 11 | Gauge parameters without id |
| | | s16 y | | |
| | | u16 r | | |
| | | u16 rln | | |
| | | u8 start | | |
| | | u8 end | | |
| | | bool clockWise | | |

In a number of embodiments of the invention, the commands also comprise commands to manage layouts, which are predefined graphical elements allowing to arrange information in a defined order. For example, a layout can be a combination of a graphical shape and a numerical value. Layouts ease the definition of a display, because the user can directly provide instructions to display a layout with its parameter(s), rather than redefining the combination of graphical elements that form the layout.

In a number of embodiments of the invention, the commands below can be sent from the computing device 110 to the Near Eye Display 120 to manage and use the layouts:

| **ID** | **commands** | **Parameters** | **Data length (B)** | **Description** |
|---|---|---|---|---|
| 0x60 | layoutSave | layout parameters | >= 17 | Save a layout |
| 0x61 | layoutDelete | id | 1 | Delete from memory the corresponding layout |
| 0x62 | layoutDisplay | id text | 2 | Display text with layout id parameters |
| 0x63 | layoutClear | id | 1 | Clears screen of the corresponding layout area |
| 0x64 | layoutList | - | 0 | Give the list of saved layouts |
| 0x65 | layout Position | id x(2B) y | 4 | Redefine the position of a layout |
| | | | | Position is saved |
| 0x66 | layoutDisplayExt ended | id x(2B) y text | 5 | Display text with layout id at position x y. Position is not saved |
| 0x67 | layoutGet | id | 1 | Get a layout parameters |

Upon the reception of the commands layoutList and layoutGet, the Near Eye Display 120 can return to the computing device 110 the list of the saved layout, and the definition of a layout respectively:

| **ID** | **commands** | **data** | **Data length (B)** | **Description** |
|---|---|---|---|---|
| 0x64 | layoutList | id..idN | n | list of layouts in memory |
| 0x67 | layoutGet | layout parameters | >= 17 | Layouts parameters without id |

In a number of embodiments of the invention, the layouts can be defined as explained below.

A layout is encoded with 17 to 128 bytes. The first parameter is the clipping region (rectangle on the display in which the layout is defined), the clipping region is defined by the coordinate of the upper top corner and the size of the region (width, height). The parameters also include the foreground color and background color of the graphical object. If the layout argument is displayed using text, its font, color, rotation, opacity, and position are defined. Then it is possible to define additional graphical commands to be displayed. The layout data can be defined as:

| **Byte offset** | **Parameter** | **Comments** |
|---|---|---|
| 0 | Id | Layout number |
| 1 | size | Size of the additional command in bytes |
| 2 | X0 | Upper left Clipping region coordinate in the display (2 bytes) |
| 4 | Y0 | Upper left Clipping region coordinate in the display |
| 5 | width | Width of the Clipping region in the display (2 bytes) |
| 7 | height | Height of the Clipping region in the display |
| 8 | ForeColor | Define the color of the region [0...15] |
| 9 | BackColor | Define the back color of the region [0...15] |
| 10 | Font | Define the font of the region |
| 11 | TextValid | Define if the argument of the layout is displayed using text |
| 12 | Text X0 | Define the position in the layout clipping region of the argument in the display (2 bytes) |
| 14 | Text Y0 | Define the position in the layout clipping region of the argument in the display |
| 15 | Text Rotation | Define the argument rotation |
| 16 | Text opacity | Define the argument opacity(on/off) |
| 17...127 | Commands | Additional graphical commands |

If additional graphical commands are needed, the size in terms of bytes of these commands can be stored in the size parameter. Examples of additional commands are identified as below, followed with the command parameters, The element positions are all referenced from the layout clipping region (X0, Y0):

| **Command** | **Id** | **Parameter length (B)** | **Parameters bytes** |
|---|---|---|---|
| image | 0 | 5 | img_id x0(2B) y0(2B) |
| circ | 1 | 6 | x0(2B) y0(2B) r(2B) |
| circf | 2 | 6 | x0(2B) y0(2B) r(2B) |
| color | 3 | 1 | Color |
| font | 4 | 1 | Font |
| line | 5 | 8 | x0(2B) y0(2B) x1(2B) y1(1B) |
| point | 6 | 2 | x0(2B) y0(2B) |
| rect | 7 | 8 | x0(2B) y0(2B) x1(2B) y1(1B) |
| rectf | 8 | 8 | x0(2B) y0(2B) x1(2B) y1(1B) |
| text | 9 | 6... | x0(2B) y0(2B) lengthofstr string(ASCII) |
| gauge | 10 | 1 | gauge_id |

The layoutPosition command provides the effect of shifting all the elements of the layout.

The layoutDisplay command causes the display of the layout, at the previously defined position, using the layout parameter.

In a number of embodiments of the invention, the Near Eye Display possesses predefined layouts, such as for example the layouts listed below:

| **Layout ID** | **Name** | **command** |
|---|---|---|
| 10 | time | 0x0A000008E8004BFF0F0001010046FE0401 |
| 11 | chrono | 0x0B06001E910112CD0F00030100C8C50401000100D10093 |
| 12 | Distance | 0x0C10001E550112910F00030100C3860401000400D100560 40109005C0072024B4D |
| 13 | Speed | 0x0D12001E550112910F00030100C3860401000200D100560 4010900610072044B4D2F48 |
| 14 | Average speed | 0x0E12001E190112550F00030100C34D0401000300D1001B0 4010900610039044B4D2F48 |
| 15 | Running cadence | 0x0F1C001E190112550F00030100C34D0401000600D1001B0 40109005C004E044D494E2F040109005C0039024B4D |
| 19 | Ascendin 9 elevation | 0x130F001E190112550F00030100C34D0401000500D1001B0 40109005C0039014D |
| 21 | Heart rate | 0x1511001 E550112910F00030100C3860401000700D1005604 0109005C00720342504D |

The displays 210, 220 and 230 are formed of predefined layouts.

For example, the display 210 is formed of:
- the layout "time" 211, which indicates the time of the day;
- the layout "chrono" 212 which indicates the elapsed time since the beginning of an activity;
- the layout "speed" 213 which indicates the instantaneous speed of the user;
- the layout "average speed" 214 which indicates the average speed since the beginning of an activity.

For example, the display 220 is formed of:
- the layout "time" 221, which indicates the time of the day;
- the layout "chrono" 222 which indicates the elapsed time since the beginning of an activity;
- the layout "distance" 223 which indicates the distance since the beginning of an activity;
- the layout "ascending elevation" 224 which indicates the cumulated ascending elevation climbed by a user since the beginning of an activity.

For example, the display 230 is formed of:
- the layout "time" 231, which indicates the time of the day;
- the layout "chrono" 232 which indicates the elapsed time since the beginning of an activity;
- the layout "heart rate" 233 which indicates the instantaneous heart rate of the user;
- the layout "running cadence" 234 which indicates number of minutes necessary to cross 1 km at the current speed of the user.

In order to display the layout, once the layout and its position are defined, it is sufficient to send a command "layoutDisplay" with the parameters of the layout. For example, in order to display the heart rate if the user by the layout 223, the computing device 110 needs to monitor the heart rate, then sends a "layoutDisplay" command with the heart rate as parameter.

As shown above, in a number of embodiments the following kind of commands are used:
- Commands to save display resources, such as the "imgSave" command to save an image, or the "layoutSave" command to display a previously saved image;
- Commands to display previously saved resources, such as the "imgDisplay" command to display an image, or the "layoutDisplay" command to display a previously saved layout.

These commands allow saving once the resources, then using them without re-sending them. Therefore, they allow using the resources with a minimal latency.

In addition, commands such as "layoutList" or "imgList" return lists of display resources, so that the computing device 110 is able to determine what are the available resource to use them, or add a missing resource if necessary.

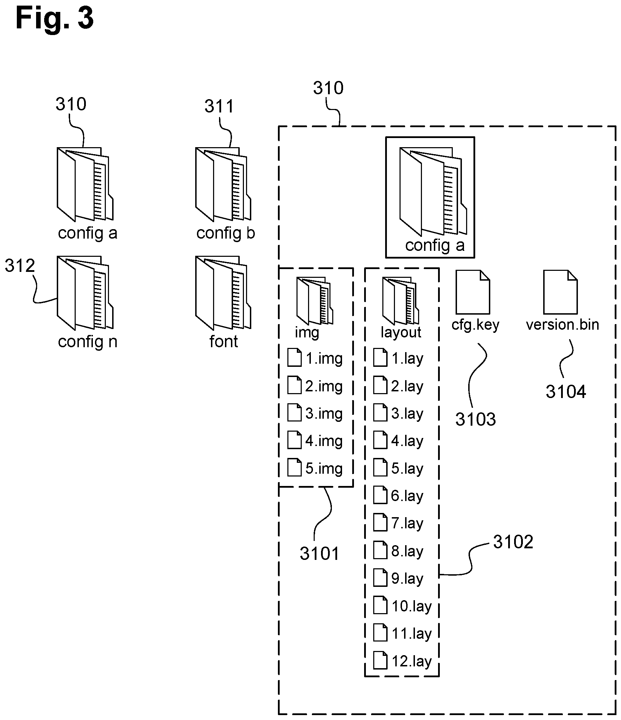

Figure 3 represents an example of an organization of display resources stored in a Near-Eye Display device in a number of embodiments of the invention.

In a number of embodiments of the invention, resources can be stored in the storage medium 122 in "configurations". A configuration can be viewed as a set of display resources for a specific use or context. For example, a configuration can comprise all the display resources required by an application, user or computing device.

The storage medium can for example comprise a specific space for storing the configuration, in a file system wherein each configuration has a name associated with a folder. For example, in the example of figure 3, three configurations are found:
- The configuration "config a" 310;
- The configuration "config b" 311;
- The configuration "config c" 312.

In practice, each application or program installed in the computing device 110 can create its own configuration. Then, all the display resource belonging to this application or program are stored in the configuration, and corresponding folder of this application or program.

Therefore, each application or program can manage its own display resources. When an application is willing to use a resource, it can verify if its configuration is present on the Near-Eye Display device, and if so, if the desired resource is already present. If this is not the case, the application can create/save the configuration, or the resource.

This therefore improves the management of resources by each application or program, and avoids the deletion of resources of an application or program by another one.

In a number of embodiments of the invention, a configuration can be password protected, in order to prevent any access or modification by an unauthorized user / application.

The figure 3 also represents an example of content of a configuration, in this example "config a".

The configuration can for example comprise one or more of the following elements:
- Images, in an "img" sub-folder 3101;
- Layouts, in a "layout" sub-folder 3102;
- A configuration file 3103, storing all the elements of meta configuration of the configuration, such as for example passwords, access rights, date, version...;
- A version file 3104.

In a number of embodiments of the invention, the processing logic 112 is configured to send to said Near-Eye Display device commands to perform one or more of:
- obtaining a list of configurations in said Near-Eye Display device;
- setting one of the configurations in said list as an active configuration;
- reading the content of a configuration;
- writing the content of a configuration;
- creating a configuration;
- deleting a configuration.

This allows a complete management of the configurations, and optimization of space to use the desired configuration and resources by the computing device. Indeed, the computing device is able to obtain any needed information about the configurations, and modify them if necessary. When a configuration is set as the active configuration, the display resources of this configuration can be directly referenced by their name to be used.

In the example detailed above using BLE and GATT to communicated between the computing device 110 and the Near Eye Display 120, the commands below can be sent from the computing device to the Near-Eye Display device:

| **ID** | **commands** | **Parameters** | **Data length (B)** | **Description** |
|---|---|---|---|---|
| 0xD0 | cfgWrite | name(12Bmax ) version(4B) password(4B) | 10 <= n <= 20 | Write configuration, configurations are associated with layouts, images, etc name: name of the configuration version: provided by user, used to track versions of configuration password: if configuration already exist, the same passsword must be provided as the one used during the creation |
| 0xD1 | cfg Read | name(12B max) | 2 <= n <= 12 | Get number of elements stored in the configuration |
| 0xD2 | cfgSet | name(12B max) | 2 <= n <= 12 | Select the current configuration used to display layouts, images, etc |
| 0xD3 | cfg List | - | 0 | List configurations in memory |
| 0xD4 | cfg Rename | oldName(12B max) newName(12 B max) password(4B) | 8 <= n <= 28 | Rename a configuration |
| 0xD5 | cfgDelete | name(12B max) | 2 <= n <= 12 | Delete a configuration and all elements associated |
| 0xD6 | cfgDeleteL essUsed | | 0 | Delete the configuration that has not be used for the longest time |
| 0xD7 | cfgFreeSpa ce | - | 0 | Get free space available to store layouts, images, etc |
| 0xD8 | cfgGetNb | - | 0 | Get number of configurations in memory |

And the information below can be returned by the Near Eye Display 120 to the computing device 110:

| **ID** | **commands** | **data** | **Data length (B)** | **Description** |
|---|---|---|---|---|
| 0xD1 | cfg Read | version(4B) nblmg nbLayout | 9 | number of elements stored in the configuration |
| | | nbFont nbPage nbGauge | | |
| 0xD3 | cfg List | name1 (12B) size1 (4B) version1 (4B) usgCnt1 installCnt1 isSystem 1 | 23 x n | name: name of the configuration size: size of the configuration in bytes version: provided by user, version of configuration usgCnt: use to sort configuration, most recent used configuration have higher value installCnt: use to sort configuration, most recent installed configuration have higher value isSystem: indicate system configuration. System configuration can't be deleted |
| | | ... | | |
| | | nameN(12B) sizeN(4B) versionN(4B) usgCntN installCntN isSystem N | | |
| 0xD7 | cfgFreeSpace | totalSize freeSpace | 8 | totalSize: total size available in byte freeSpace: freeSpace available in byte |
| 0xD8 | cfgGetNb | nbConfig | 1 | number of configurations stored in memory |

In a number of embodiments of the invention, the storage space dedicated to the configurations can be limited, in order to limit the size of the memory in the Near-Eye Display device. For example, a 3MB space can be allocated to the configurations. Therefore, the free space may in some cases not be sufficient to create a new configuration, or save a display resource.

In a number of embodiments of the invention, the at least one processing logic is configured, prior to create a configuration or save a display resource, to send commands to the Near-Eye Display device to:
- obtain an amount of free space;
- if said free space is not sufficient to create the configuration or save the display resource, delete an other configuration.

This allows increasing the amount of free space when needed, to be able to save extra configuration/display resources. If needed, more than one configuration can be deleted.

Of course, the deleted configuration may need to be reinstalled afterwards, for example when the application to which the other configuration belongs to is launched again. Therefore, the configuration to delete may be selected, in order to decrease the probability of having to reinstall it, or at least increase the time before a reinstallation of configuration is needed.

One option consists for example in deleting the configuration that has been set as active configuration since the longest time.

Indeed, a configuration that has not been set as active configuration since a long time is deemed to belong to an application which is not used anymore, or at least not used very often. Therefore, such a configuration should not be needed soon.

Another option consists in deleting a configuration that is set as active configuration the least often.

Indeed, a configuration which is set as active configuration the least often is deemed to belong to an application that is not frequently run. Therefore, it can be expected that such an application will not run before a long time.

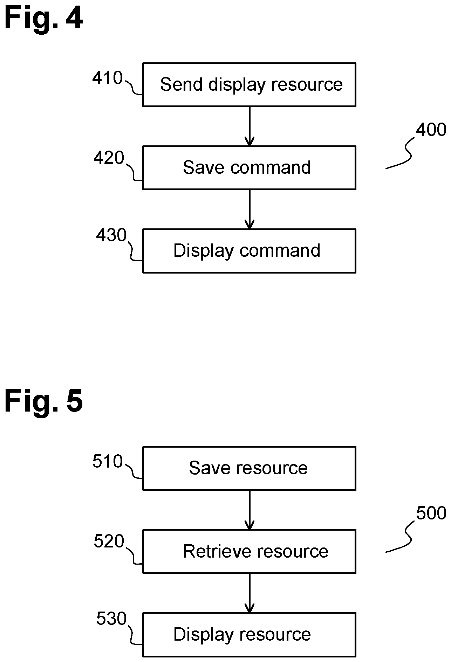

The figure 4 represents an example of computer-implemented method executable by a computing device in a number of embodiments of the invention.

All the steps of the method 400 are executed by a computing device such as the computing device 110.

The method 400 comprises a first step 410 of sending a display resource to a Near Eye Display such as the Near Eye Display 120.

The method 400 further comprises a second step 420 of sending a command to said Near-Eye Display device to save said resource.

The method 400 further comprises a third step 430 of, whenever a display of said resource to a wearer of the Near Eye Display is needed, sending 430 a command to said Near Eye Display to display said resource.

All the embodiments discussed above are respectively applicable to the method 400.

The display resource needs to have been saved before the step 430 is executed. However, the order of steps 410 and 420 may be inversed, or these two steps may be executed simultaneously. For example, the command "imgSave" mentioned above is a command to save an image, and the image itself is sent as an argument of the command. Therefore, the sending of the command "imgSave" with an image as parameter cause the simultaneous execution of steps 410 and 420.

Figure 5 represents an example of a computer-implemented method executable by a Near Eye Display in a number of embodiments of the invention.

The method 500 comprises a first step 510 of upon the reception from said computing device of a display resource, and a command to save said resource, saving said display resource on a storage medium.

The method 500 comprises, upon the reception from said computing device of a command to display said resource a second step 520 of retrieving said resource from said storage medium, and a third step 530 of displaying said resource.

All the embodiments discussed above are respectively applicable to the method 500.

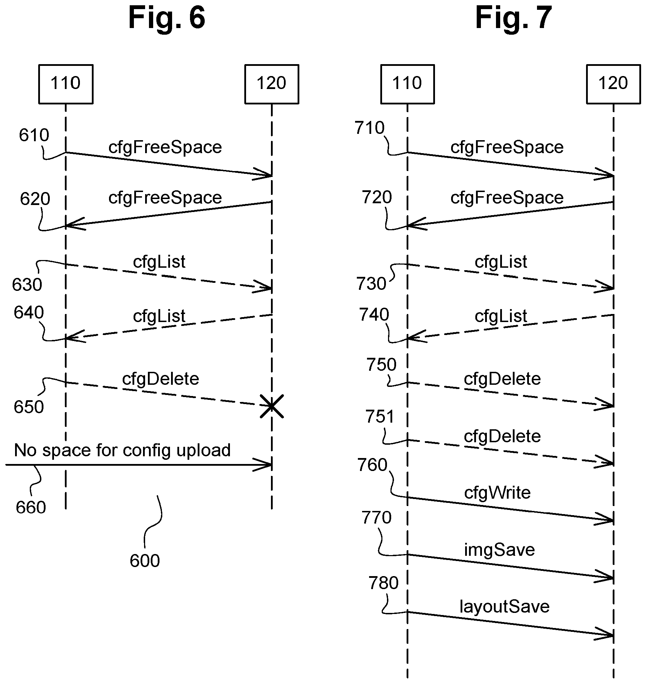

Figure 6 represents an example of deletion of a display configuration in a number of embodiments of the invention.

The figures 6 to 9 represent examples of management of configurations. They are provided using the exemplary set of commands described above, using BLE and the GATT protocol. Of course, they are provided by means of example only, and similar functions may be obtained using different languages.

Each of the figure 6 to 9 represents a sequence diagram, wherein the left column represents the computing device 110, and the right column the Near Eye Display 120. More specifically, the left column 110 represents an application running on the computing device 110.

In the diagram 600 of figure 6, the application is willing to upload a configuration by adding new resources.

In the step 610, the application sends a command "cfgFreeSpace" to the Near-Eye Display device, which provide in return, at step 620, the available free space in the configurations memory pool.

In this example, the free space is not sufficient for adding the resources. The application is therefore looking for configurations to delete in order to free space.

It therefore sends at step 630 a command "cfgList", so that the Near-Eye Display device provides in return, at step 640, the list of configurations.

At step 650, the application sends a command "cfgDelete" to delete one of the configurations which is already present. However, in this example, the deletion fails, because it is not possible for the application to delete this configuration.

There are indeed some cases in which a configuration cannot be deleted:
- a "system" configuration, which needs to be permanent, cannot be deleted;
- a configuration may be associated with edition rights, and the application may not have the right to modify or delete the configuration.

Therefore, in step 660, it is in this case not possible to for the application to upload new data to for its own configuration.

Figure 7 represents an example of creation of a configuration in a number of embodiments of the invention.

In this example, the application is also willing to upload new data in its configuration, but in this example, it is possible to delete the other configurations.

The steps 710, 720, 730 and 740 are respectively similar to steps 610, 620, 630 and 640: the application obtains the available free space, and the list of existing configurations.

The free space not being sufficient for uploading the new display resources, the applications sends commands at steps 750 and 751 to delete a first, then a second configuration. In this example, the deletions are successful.

After these two deletions, the available free space is sufficient for saving the resources. The application then sends the commands:
- cfgWrite, at step 760, to write the configuration to reflect the addition of the new elements;
- imgWrite, at step 770, to write an additional image in the configuration of the application;
- layoutWrite, at step 780, to write an additional layout in the configuration of the application.

Therefore, the application can benefit from an updated configuration.

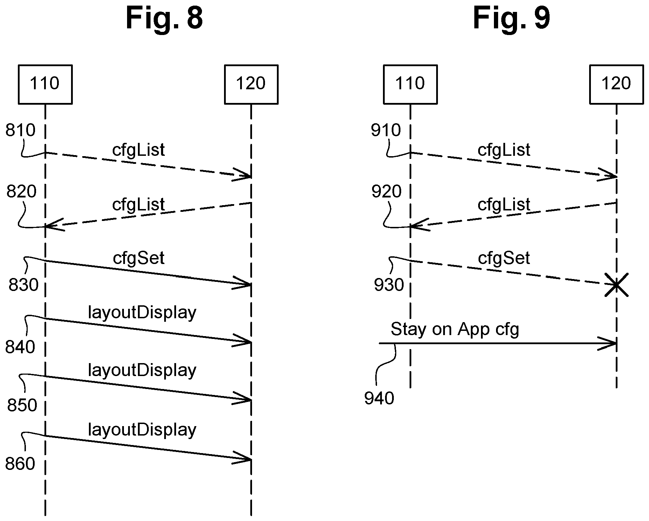

Figure 8 represents an example of selection of a configuration, and display of layout of the configuration, in a number of embodiments of the invention.

When started, the application queries the Near-Eye Display device to ensure that its configuration is available.

To this effect, the application sends the command "cfgList" at step 810, and the Near-Eye Display device returns the list of configurations at step 820.

The configuration of the application being available, the application sends at step 830 the command "cfgSet" to set its configuration as the active configuration.

Then, the layouts of the application can be used. The application sends 3 commands "layoutDisplay", at steps 840, 850, 860 respectively, to display 3 different layouts.

Figure 9 represents an example of failed selection of a configuration in a number of embodiments of the invention.

In this example, the steps 910 and 920 are identical to the steps 810 and 820.

In step 930, the application sends a command "cfgSet" to set a desired configuration as the active configuration. However, in this case, the command fails. For example, a "cfgSet" may fail if a configuration is password protected, and the user is not able to enter a correct password, or if the access rights for using the configuration prevent the application, or the computing device, from using the configuration.

Thus, at step 940, the current active configuration is kept, since the configuration cannot be set to the desired configuration.

This demonstrates how the computing device and Near-Eye Display device 120 can interact to set the appropriate configuration for displaying graphics in the Near-Eye Display device 120.

They also demonstrate how a mix of commands to set, use and obtain information about configurations and display resources allow the computing device to set and use the desired configurations.

The examples described above are given as non-limitative illustrations of embodiments of the invention. They do not in any way limit the scope of the invention which is defined by the following claims.

## Claims

1. A computing device (110) comprising:
- a communication endpoint (111) configured to establish a connection with a Near-Eye Display device (120);
- at least one processing logic (112) configured to send to said Near-Eye Display device, through said communication endpoint:
- a layout comprising at least one graphical command, each of said at least one graphical command being defined by an identifier and at least one command parameter;
- a command to save said layout;
- whenever a display of said layout to a wearer of the Near-Eye Display device is needed, a command to display said layout.

2. The computing device of claim 1, wherein said communication endpoint is a Bluetooth Low Energy, BLE, communication endpoint.

3. The computing device of claim 2, wherein the Near-Eye Display device is a BLE server.

4. The computing device of any one of the preceding claims, wherein layouts belonging to a same application or program installed in the computing device are stored in a same configuration in the Near-Eye Display device, said configuration corresponding to a defined folder in a storage medium of the Near-Eye Display device.

5. The computing device of claim 4, wherein the at least one processing logic is configured to send to said Near-Eye Display device commands to perform one or more of:
- obtaining a list of configurations in said Near-Eye Display device;
- setting one of the configurations in said list as an active configuration;
- reading the content of a configuration;
- writing the content of a configuration;
- creating a configuration;
- deleting a configuration.

6. The computing device of one of claims 4 or 5, wherein the at least one processing logic is configured, prior to create a configuration or save a layout, to send commands to the Near-Eye Display device to:
- obtain an amount of free space;
- if said free space is not sufficient to create the configuration or save the layout, delete an other configuration.

7. The computing device of claim 6, wherein the other configuration is the configuration that has been set as active configuration since the longest time.

8. The computing device of claim 6, wherein the other configuration is the configuration that is set as active configuration the least often.

9. A Near-Eye Display device (120) comprising:
- a communication endpoint (121) configured to establish a connection with a computing device (110);
- display means configured to display one or more layouts ;
- a storage medium (122);
- at least one processing logic (123) configured to:
- upon the reception from said computing device of a layout comprising at least one graphical command, each of said at least one graphical command being defined by an identifier and at least one command parameter, and a command to save said layout, saving said layout on said storage medium;
- upon the reception from said computing device of a command to display said layout, retrieving said layout from said storage medium, and displaying said layout.

10. A computing system (100) comprising:
- a computing device according to one of claims 1 to 8;
- a Near-Eye Display device according to claim 9.

11. A computer-implemented method (400) comprising, by a computing device (110):
- sending (410) to a Near-Eye Display device (120) a layout comprising at least one graphical command, each of said at least one graphical command being defined by an identifier and at least one command parameter;
- sending (420) a command to said Near-Eye Display device to save said layout;
- whenever a display of said layout to a wearer of the Near-Eye Display device is needed, sending (430) a command to said Near-Eye Display device to display said layout.

12. A computer-implemented method (500) comprising, by a Near-Eye Display device (120) according to claim 8:
- upon the reception from said computing device of a layout comprising at least one graphical command, each of said at least one graphical command being defined by an identifier and at least one command parameter, and a command to save said layout, saving (510) said layout on a storage medium;
- upon the reception from said computing device of a command to display said layout, retrieving (520) said layout from said storage medium, and displaying (530) said layout.

13. A computer program product, stored on a non-transitory computer readable medium, comprising computer code instructions which, when executed by a computer, cause the computer to execute a method according to one of claims 11 or 12.

14. A computer-readable storage medium comprising instructions which, when executed by a computer, cause the computer to execute a method according to one of claims 11 or 12.

## Patentansprüche

1. Rechenvorrichtung (110), umfassend:
- einen Kommunikationsendpunkt (111), welcher dazu eingerichtet ist, eine Verbindung mit einer Near-Eye-Display-Vorrichtung (120) herzustellen;
- wenigstens eine Verarbeitungslogik (112), welche dazu eingerichtet ist, zu der Near-Eye-Display-Vorrichtung durch den Kommunikationsendpunkt zu schicken:
- ein Layout, welches wenigstens einen grafischen Befehl umfasst, wobei jeder des wenigstens einen grafischen Befehls durch einen Identifikator und wenigstens einen Befehlsparameter definiert ist;
- einen Befehl, um das Layout zu speichern;
- wann immer ein Anzeigen des Layouts zu einem Träger der Near-Eye-Display-Vorrichtung notwendig ist, einen Befehl, um das Layout anzuzeigen.

2. Rechenvorrichtung nach Anspruch 1, wobei der Kommunikationsendpunkt ein Bluetooth-Low-Energy, BLE, Kommunikationsendpunkt ist.

3. Rechenvorrichtung nach Anspruch 2, wobei die Near-Eye-Display-Vorrichtung ein BLE-Server ist.

4. Rechenvorrichtung nach einem der vorhergehenden Ansprüche, wobei Layouts, welche zu einer gleichen Anwendung oder zu einem gleichen Programm gehören, welche! welches in der Rechenvorrichtung installiert ist, in einer gleichen Konfiguration in der Near-Eye-Display-Vorrichtung gespeichert sind, wobei die Konfiguration einem definierten Ordner in einem Speichermedium der Near-Eye-Display-Vorrichtung entspricht.

5. Rechenvorrichtung nach Anspruch 4, wobei die wenigstens eine Verarbeitungslogik dazu eingerichtet ist, zu der Near-Eye-Display-Vorrichtung Befehle zu senden, um eines oder mehrere durchzuführen, aus:
- Erhalten einer Liste von Konfigurationen in der Near-Eye-Display-Vorrichtung;
- Einstellen einer der Konfigurationen in der Liste als eine aktive Konfiguration;
- Lesen des Inhalts einer Konfiguration;
- Schreiben des Inhalts einer Konfiguration;
- Erstellen einer Konfiguration;
- Löschen einer Konfiguration.

6. Rechenvorrichtung nach einem der Ansprüche 4 oder 5, wobei die wenigstens eine Verarbeitungslogik dazu eingerichtet ist, vor Erstellen einer Konfiguration oder Speichern eines Layouts, Befehle zu der Near-Eye-Display-Vorrichtung zu senden, um:
- eine Menge eines freien Raums zu erhalten;
- wenn der freie Raum für ein Erstellen einer Konfiguration oder für ein Speichern eines Layouts nicht ausreichend ist, eine andere Konfiguration zu löschen.

7. Rechenvorrichtung nach Anspruch 6, wobei die andere Konfiguration die Konfiguration ist, welche seit der längsten Zeit als aktive Konfiguration eingestellt ist.

8. Rechenvorrichtung nach Anspruch 6, wobei die andere Konfiguration die Konfiguration ist, welche am wenigsten als aktive Konfiguration eingestellt ist.

9. Near-Eye-Display-Vorrichtung (120), umfassend:
- einen Kommunikationsendpunkt (121), welcher dazu eingerichtet ist, eine Verbindung mit einer Rechenvorrichtung (110) herzustellen;
- Displaymittel, welche dazu eingerichtet sind, ein oder mehrere Layouts anzuzeigen;
- ein Speichermedium (122);
- wenigstens eine Verarbeitungslogik (123), welche dazu eingerichtet ist:
- auf den Empfang eines Layouts von der Rechenvorrichtung hin, welches wenigstens einen grafischen Befehl, wobei jeder des wenigstens einen grafischen Befehls durch einen Identifikator und wenigstens einen Befehlsparameter definiert ist, und einen Befehl umfasst, um das Layout zu speichern, das Layout auf dem Speichermedium zu speichern;
- auf den Empfang eines Befehls von der Rechenvorrichtung hin, das Layout anzuzeigen, das Layout von dem Speichermedium abzurufen und das Layout anzuzeigen.

10. Rechensystem (100), umfassend:
- eine Rechenvorrichtung nach einem der Ansprüche 1 bis 8;
- eine Near-Eye-Display-Vorrichtung nach Anspruch 9.

11. Computerimplementiertes Verfahren (400), umfassend durch eine Rechenvorrichtung (110):
- Senden (410) eines Layouts zu einer Near-Eye-Display-Vorrichtung (120), welches wenigstens einen grafischen Befehl umfasst, wobei jeder des wenigstens einen grafischen Befehls durch einen Identifikator und wenigstens einen Befehlsparameter definiert ist;
- Senden (420) eines Befehls zu der Near-Eye-Display-Vorrichtung, um das Layout zu speichern;
- wann immer ein Anzeigen des Layouts zu einem Träger der Near-Eye-Display-Vorrichtung notwendig ist, Senden (430) eines Befehls zu der Near-Eye-Display-Vorrichtung, um das Layout anzuzeigen.

12. Computerimplementiertes Verfahren (500), umfassend durch eine Near-Eye-Display-Vorrichtung (120) nach Anspruch 8:
- auf den Empfang eines Layouts von der Rechenvorrichtung hin, welches wenigstens einen grafischen Befehl, wobei jeder des wenigstens einen grafischen Befehls durch einen Identifikator und wenigstens einen Befehlsparameter definiert ist, und einen Befehl umfasst, um das Layout zu speichern, Speichern (510) des Layouts auf einem Speichermedium;
- auf den Empfang eines Befehls von der Rechenvorrichtung hin, das Layout anzuzeigen, Abrufen (520) des Layouts von dem Speichermedium und Anzeigen (530) des Layouts.

13. Computerprogrammprodukt, welches auf einem nicht-transitorischen computerlesbaren Medium gespeichert ist, welches Computercodeanweisungen umfasst, welche, wenn durch einen Computer ausgeführt, den Computer dazu veranlassen, ein Verfahren nach einem der Ansprüche 11 oder 12 auszuführen.

14. Computerlesbares Speichermedium, welches Anweisungen umfasst, welche, wenn durch einen Computer ausgeführt, den Computer dazu veranlassen, ein Verfahren nach einem der Ansprüche 11 oder 12 auszuführen.

## Revendications

1. Dispositif informatique (110) comprenant :
- un point d'extrémité de communication (111) configuré pour établir une connexion avec un dispositif d'affichage proche de l'oeil (120) ;
- au moins une logique de traitement (112) configurée pour envoyer audit dispositif d'affichage proche de l'oeil, par l'intermédiaire dudit point d'extrémité de communication :
- une mise en page comprenant au moins une commande graphique, chacune de ladite au moins une commande graphique étant définie par un identifiant et au moins un paramètre de commande ;
- une commande pour sauvegarder ladite mise en page ;
- chaque fois qu'un affichage de ladite mise en page à un porteur du dispositif d'affichage proche de l'oeil est nécessaire, une commande pour afficher ladite mise en page.

2. Dispositif informatique selon la revendication 1, dans lequel ledit point d'extrémité de communication est un point d'extrémité de communication Bluetooth à basse énergie, BLE.

3. Dispositif informatique selon la revendication 2, dans lequel le dispositif d'affichage proche de l'oeil est un serveur BLE.

4. Dispositif informatique selon l'une quelconque des revendications précédentes, dans lequel des mises en page appartenant à une même application ou un même programme installé dans le dispositif informatique sont stockées dans une même configuration dans le dispositif d'affichage proche de l'oeil, ladite configuration correspondant à un répertoire défini dans un support de stockage du dispositif d'affichage proche de l'oeil.

5. Dispositif informatique selon la revendication 4, dans lequel l'au moins une logique de traitement est configurée pour envoyer audit dispositif d'affichage proche de l'oeil des commandes pour réaliser un ou plusieurs parmi :
- l'obtention d'une liste de configurations dans ledit dispositif d'affichage proche de l'œil ;
- le réglage d'une des configurations dans ladite liste comme une configuration active ;
- la lecture du contenu d'une configuration ;
- l'écriture du contenu d'une configuration ;
- la création d'une configuration ;
- la suppression d'une configuration.

6. Dispositif informatique selon une des revendications 4 ou 5, dans lequel l'au moins une logique de traitement est configurée, avant de créer une configuration ou sauvegarder une mise en page, pour envoyer des commandes au dispositif d'affichage proche de l'œil pour :
- obtenir une quantité d'espace libre ;
- si ledit espace libre n'est pas suffisant pour créer la configuration ou sauvegarder la mise en page, supprimer une autre configuration.

7. Dispositif informatique selon la revendication 6, dans lequel l'autre configuration est la configuration qui a été réglée comme une configuration active depuis le temps le plus long.

8. Dispositif informatique selon la revendication 6, dans lequel l'autre configuration est la configuration qui a été réglée comme une configuration active le plus souvent.

9. Dispositif d'affichage proche de l'oeil (120) comprenant :
- un point d'extrémité de communication (121) configuré pour établir une connexion avec un dispositif informatique (110) ;
- des moyens d'affichage configurés pour afficher une ou plusieurs mises en page ;
- un support de stockage (122) ;
- au moins une logique de traitement (123) configurée pour :
- à la réception, à partir dudit dispositif informatique, d'une mise en page comprenant au moins une commande graphique, chacune de ladite au moins une commande graphique étant définie par un identifiant et au moins un paramètre de commande, et d'une commande pour sauvegarder ladite mise en page, la sauvegarde de ladite mise en page sur ledit support de stockage ;
- à la réception, à partir dudit dispositif informatique, d'une commande pour afficher ladite mise en page, la récupération de ladite mise en page à partir dudit support de stockage, et l'affichage de ladite mise en page.

10. Système informatique (100) comprenant :
- un dispositif informatique selon une des revendications 1 à 8 ;
- un dispositif d'affichage proche de l'oeil selon la revendication 9.

11. Procédé mis en oeuvre par ordinateur (400) comprenant, par un dispositif informatique (110) :
- l'envoi (410), à un dispositif d'affichage proche de l'oeil (120), d'une mise en page comprenant au moins une commande graphique, chacune de ladite au moins une commande graphique étant définie par un identifiant et au moins un paramètre de commande ;
- l'envoi (420) d'une commande audit dispositif d'affichage proche de l'oeil pour sauvegarder ladite mise en page ;
- chaque fois qu'un affichage de ladite mise en page à un porteur du dispositif d'affichage proche de l'oeil est nécessaire, l'envoi (430) d'une commande audit dispositif d'affichage proche de l'oeil pour afficher ladite mise en page.

12. Procédé mis en oeuvre par ordinateur (500) comprenant, par un dispositif d'affichage proche de l'oeil (120) selon la revendication 8 :
- à la réception, à partir dudit dispositif informatique, d'une mise en page comprenant au moins une commande graphique, chacune de ladite au moins une commande graphique étant définie par un identifiant et au moins un paramètre de commande, et d'une commande pour sauvegarder ladite mise en page, la sauvegarde (510) de ladite mise en page sur ledit support de stockage ;
- à la réception, à partir dudit dispositif informatique, d'une commande pour afficher ladite mise en page, la récupération (520) de ladite mise en page à partir dudit support de stockage, et l'affichage (530) de ladite mise en page.

13. Produit de programme informatique, stocké sur un support non transitoire lisible par ordinateur, comprenant des instructions de code informatique qui, quand elles sont exécutées par un ordinateur, amènent l'ordinateur à exécuter un procédé selon une des revendications 11 ou 12.

14. Support de stockage lisible par ordinateur, comprenant des instructions qui, quand elles sont exécutées par un ordinateur, amènent l'ordinateur à exécuter un procédé selon une des revendications 11 ou 12.
